# FASCICULE DE BREVET EUROPEEN

(11) **EP 2 915 244 B1**
(45) Date de publication et mention de la délivrance du brevet: **06.12.2017**
(21) Numéro de dépôt: 13805440.8
(22) Date de dépôt: 30.10.2013
(51) Int. Cl.: H02M 7/02, B60L 11/18, B60L 15/00, H02J 7/02, H02M 7/797

(54) **PROCEDE DE TRANSFERT DE CHARGE ET DISPOSITIF ELECTRIQUE ASSOCIÉ**
LADUNGSÜBERTRAGUNGSVERFAHREN UND ZUGEHÖRIGE ELEKTRISCHE VORRICHTUNG
CHARGE TRANSFER METHOD AND RELATED ELECTRIC DEVICE

(30) Priorité: 30.10.2012 FR 1260366
(43) Date de publication de la demande: 09.09.2015
(73) Titulaire: Valeo Systèmes de Contrôle Moteur, 95800 Cergy (FR)
(72) Inventeur: DA COSTA, José-Louis, F-95130 Franconville (FR); DIJOL, Sébastien, F-93110 Rosny Sous Bois (FR); BOUALLAGA, Kamel, Basildon Essex SS16 5GN (GB)
(74) Mandataire: Argyma
(86) Numéro de dépôt international: PCT/FR2013/052603
(87) Numéro de publication internationale: WO 2014/068254

(56) Documents cités:
- EP-A1- 2 012 338
- EP-A1- 2 226 215
- US-A1- 2012 007 552
- LUIS DE SOUSA ET AL: "A combined multiphase electric drive and fast battery charger for Electric Vehicles", VEHICLE POWER AND PROPULSION CONFERENCE (VPPC), 2010 IEEE, IEEE, 1 septembre 2010 (2010-09-01), pages 1-6, XP031929193, DOI: 10.1109/VPPC.2010.5729057 ISBN: 978-1-4244-8220-7

## Description

La présente invention concerne le domaine des dispositifs électriques permettant des transferts de charge vers des moyens d'accumulation et plus particulièrement les dispositifs électriques situés dans les véhicules automobiles.

L'utilisation de moteurs électriques dans les véhicules automobiles implique l'utilisation de moyens d'accumulation pour alimenter le moteur. Les moyens d'accumulation sont par exemple des batteries rechargeables, qui peuvent être rechargées par une source électrique comme par exemple un réseau domestique ou une borne de chargement. L'adaptation entre la source électrique et les moyens d'accumulation implique l'utilisation de dispositifs électriques permettant le transfert de charge entre la source électrique et les moyens d'accumulation. Parmi les solutions proposées, l'une consiste à utiliser un redresseur comprenant des inductances pour convertir une tension alternative fournie par la source électrique en tension continue, la tension continue étant ensuite transmise à la batterie via un convertisseur de tension. Avec un tel dispositif électrique, un condensateur doit être introduit entre le redresseur et le convertisseur de tension pour adapter les deux circuits et transformer la source de courant obtenue à la sortie du redresseur en source de tension. Cependant, avec un tel dispositif, des sur-courants apparaissent de façon transitoire lorsque le dispositif est relié à la source électrique. Le condensateur étant déchargé, il apparaît un fort appel de courant lors du branchement à la source électrique. Or, ces sur-courants peuvent entrainer une usure prématurée du condensateur et enclencher des dispositifs externes de disjonction qui s'activent en cas de sur-courant délivré par la source électrique. De même, si la source électrique est une source de courant continu, un condensateur est nécessaire pour charger les moyens d'accumulation de sorte que des sur-courants peuvent également apparaître.

Le document EP 2 012 338 A1 divulgue un procédé de transfert de charge vers des moyens d'accumulation d'un dispositif électrique d'un véhicule automobile à partir d'une source électrique selon le préambule de la revendication 1 et un dispositif électrique d'un véhicule automobile selon la revendication 6. Le but de la présente invention est donc de proposer une solution qui permet de surmonter les inconvénients précités de l'état de la technique et de recharger les moyens d'accumulation sans créer de sur-courants. De plus, pour être applicable au domaine automobile, la solution doit nécessiter un coût réduit et donc requérir un minimum de composants supplémentaires.

Les modes de réalisation de la présente invention ont donc pour objet un procédé de transfert de charge vers des moyens d'accumulation d'un dispositif électrique d'un véhicule automobile à partir d'une source électrique, ledit dispositif électrique comprenant:
- un convertisseur de tension connecté aux moyens d'accumulation,
- un condensateur connecté au convertisseur de tension,
- des moyens de connexion du dispositif électrique destinés à être reliés à la source électrique,
le procédé comprenant une étape de branchement des moyens de connexion à la source électrique pour permettre un transfert de charge vers les moyens d'accumulation et comprenant également une étape de précharge du condensateur à une tension prédéterminée à partir de la tension fournie par les moyens d'accumulation par l'intermédiaire du convertisseur de tension, ladite étape de précharge étant antérieure au transfert de charge de la source électrique vers les moyens d'accumulation.

Selon un autre aspect de la présente invention, la valeur de tension prédéterminée correspond à une tension supérieure ou égale à la tension obtenue aux bornes du condensateur lors de la charge des moyens d'accumulation par la source électrique.

Selon un aspect additionnel de la présente invention, le dispositif électrique comprend également un redresseur et des inductances, ledit redresseur étant connecté d'une part au condensateur et d'autre part aux inductances, lesdites inductances étant reliées aux moyens de connexion.

Selon un aspect supplémentaire de la présente invention, lors de l'étape de précharge, les interrupteurs du redresseur sont ouverts.

Selon un autre aspect de la présente invention, le redresseur est un convertisseur à ponts en H et les inductances comprennent les phases d'un moteur électrique.

Selon un autre aspect du procédé de la présente invention, ledit dispositif comprenant en outre un second convertisseur de tension connecté d'une part entre les premiers moyens d'accumulation et le premier convertisseur et d'autre part à de seconds moyens d'accumulation, dans le procédé, à ladite étape de précharge, le second convertisseur de tension délivre, à partir de la tension fournie par les seconds moyens d'accumulation, une tension intermédiaire à partir de laquelle le premier convertisseur de tension précharge le condensateur à ladite tension prédéterminée.

Les modes de réalisation de la présente invention concernent également un dispositif électrique d'un véhicule automobile comprenant:
- des moyens d'accumulation,
- un convertisseur de tension connecté aux moyens d'accumulation,
- un condensateur connecté au convertisseur de tension,
- des moyens de connexion du dispositif électrique configurés pour être reliés à une source électrique pour permettre un transfert de charge vers les moyens d'accumulation depuis ladite source électrique, et
dans lequel le convertisseur de tension est configuré pour précharger le condensateur à une tension prédéterminée à partir de la tension fournie par les moyens d'accumulation, avant le transfert de charge de ladite source électrique vers les moyens d'accumulation.

Selon un autre aspect de la présente invention, la tension prédéterminée correspond à une tension supérieure ou égale à la tension établie aux bornes du condensateur lors de la charge des moyens d'accumulation par la source électrique.

Selon un aspect supplémentaire de la présente invention, le dispositif électrique comprend également un redresseur et des inductances, ledit redresseur étant connecté d'une part au condensateur et d'autre part aux inductances, lesdites inductances étant reliées aux moyens de connexion.

Selon un aspect additionnel de la présente invention, le redresseur est un convertisseur à ponts en H et les inductances comprennent les phases d'un moteur électrique.

Selon un aspect supplémentaire de la présente invention, les ponts du convertisseur comprennent une première et une seconde branches parallèles et une branche transversale, lesdites branches parallèles comprenant deux interrupteurs montés en série, et ladite branche transversale comprenant une desdites inductances et reliant les points milieux desdites première et deuxième branches parallèles.

Selon un aspect additionnel de la présente invention, le moteur électrique est un moteur triphasé.

Selon un autre aspect de la présente invention, les phases du moteur comprennent un bobinage à point milieu et les moyens de connexion sont reliés au niveau des points milieux des bobinages des phases du moteur électrique.

Selon un autre aspect de la présente invention, le convertisseur de tension est un convertisseur de tension continue-continue et comprend deux interrupteurs montés en série entre une première et une seconde bornes d'entrée, le point milieu situé entre les deux interrupteurs étant connecté à une première borne d'une inductance dont la seconde borne est reliée à une première borne de sortie, une seconde borne de sortie étant reliée à la seconde borne d'entrée et à la masse.

Selon un aspect supplémentaire de la présente invention, les moyens d'accumulation comprennent une borne positive connectée à la première borne de sortie du convertisseur de tension et une borne négative reliée à la seconde borne de sortie du convertisseur de tension.

Selon un aspect additionnel de la présente invention, le condensateur est branché entre la première et la seconde borne d'entrée du convertisseur de tension.

Selon un autre aspect de la présente invention, les interrupteurs comprennent un transistor avec une diode montée en antiparallèle.

Selon un autre aspect de la présente invention, le dispositif comprend en outre un second convertisseur de tension connecté d'une part entre les moyens d'accumulation et le premier convertisseur et d'autre part à de seconds moyens d'accumulation, dans lequel le second convertisseur de tension est configuré pour délivrer, à partir de la tension fournie par les seconds moyens d'accumulation, une tension intermédiaire à partir de laquelle le premier convertisseur de tension précharge le condensateur à ladite tension prédéterminée.

Selon un autre aspect de la présente invention, les premiers moyens d'accumulation sont destinés à alimenter un moteur électrique et les seconds moyens d'accumulation sont destinés à alimenter un ou plusieurs consommateurs électriques différents dudit moteur électrique.

Dans un mode de réalisation particulier compatible avec les autres aspects du procédé ou du dispositif de l'invention, les interrupteurs du redresseur sont ouverts lors de l'étape de précharge. En particulier, lors de la précharge, le condensateur est isolé de la source électrique seulement grâce à l'état ouvert des interrupteurs du redresseur. Ainsi, dans ce mode de réalisation particulier, le procédé et le dispositif ne font pas appel à d'autres interrupteurs pour isoler le condensateur, le convertisseur de tension et/ou les moyens d'accumulation lors de la précharge. Les interrupteurs servant à isoler le condensateur , le convertisseur de tension et/ou les moyens d'accumulation, de la source électrique sont des composants du redresseur, notamment des interrupteurs appartenant aux bras du redresseur.

L'invention concerne en outre un procédé de transfert de charge vers des moyens d'accumulation d'un dispositif électrique d'un véhicule automobile à partir d'une source électrique, ledit dispositif électrique comprenant:
- un convertisseur de tension connecté aux moyens d'accumulation,
- un condensateur connecté au convertisseur de tension,
- des moyens de connexion du dispositif électrique destinés à être reliés à la source électrique,
- un second convertisseur de tension connecté d'une part entre les premiers moyens d'accumulation et le premier convertisseur et d'autre part à de seconds moyens d'accumulation,
le procédé comprenant une étape de branchement des moyens de connexion à la source électrique pour permettre un transfert de charge vers les moyens d'accumulation,
caractérisé en ce que le procédé comprend également une étape de précharge du condensateur à une tension prédéterminée à partir de la tension fournie par les moyens d'accumulation par l'intermédiaire du convertisseur de tension, ladite étape de précharge étant antérieure au transfert de charge de la source électrique vers les moyens d'accumulation, et en ce que, à ladite étape de précharge, le second convertisseur de tension (14) délivre, à partir de la tension fournie par les seconds moyens d'accumulation (22), une tension intermédiaire à partir de laquelle le premier convertisseur de tension (13) précharge le condensateur (11) à ladite tension prédéterminée.

Le procédé peut comprendre l'une quelconque des caractéristiques décrites précédemment.

L'invention concerne encore un dispositif électrique d'un véhicule automobile comprenant:
- des moyens d'accumulation,
- un convertisseur de tension connecté aux moyens d'accumulation,
- un condensateur connecté au convertisseur de tension,
- des moyens de connexion du dispositif électrique configurés pour être reliés à une source électrique pour permettre un transfert de charge vers les moyens d'accumulation depuis ladite source électrique,
- un second convertisseur de tension connecté d'une part entre les moyens d'accumulation et le premier convertisseur et d'autre part à de seconds moyens d'accumulation,
caractérisé en ce que le convertisseur de tension est configuré pour précharger le condensateur à une tension prédéterminée à partir de la tension fournie par les moyens d'accumulation, avant le transfert de charge de ladite source électrique vers les moyens d'accumulation et en ce que le second convertisseur de tension est configuré pour délivrer, à partir de la tension fournie par les seconds moyens d'accumulation, une tension intermédiaire à partir de laquelle le premier convertisseur de tension précharge le condensateur à ladite tension prédéterminée.

Le dispositif peut comprendre l'une quelconque des caractéristiques décrites précédemment.

L'invention concerne aussi un procédé de transfert de charge vers des premiers moyens d'accumulation d'un dispositif électrique d'un véhicule automobile à partir d'une source électrique, ledit dispositif électrique comprenant:
- un premier convertisseur de tension connecté aux premiers moyens d'accumulation,
- un condensateur connecté au premier convertisseur de tension,
- des moyens de connexion du dispositif électrique destinés à être reliés à la source électrique,
- un second convertisseur de tension connecté d'une part entre les premiers moyens d'accumulation et le premier convertisseur et d'autre part à de seconds moyens d'accumulation,
le procédé comprenant une étape de branchement des moyens de connexion à la source électrique pour permettre un transfert de charge vers les premiers moyens d'accumulation,
le procédé comprenant également une étape de précharge du condensateur à une tension prédéterminée, dans laquelle le second convertisseur de tension délivre, à partir de la tension fournie par les seconds moyens d'accumulation, une tension intermédiaire à partir de laquelle le premier convertisseur de tension précharge le condensateur à ladite tension prédéterminée.

Selon une variante de ce procédé de transfert, le procédé comprend avant l'étape de précharge, une étape d'ouverture d'un interrupteur situé entre d'une part les premiers moyens d'accumulation et d'autre part les premier et second convertisseurs de façon à déconnecter les premiers moyens d'accumulation des autres parties du dispositif.

Le procédé peut comprendre l'une quelconque des caractéristiques décrites précédemment qui lui sont compatibles.

L'invention concerne aussi un dispositif électrique d'un véhicule automobile comprenant :
- des premiers moyens d'accumulation,
- un premier convertisseur de tension connecté aux premiers moyens d'accumulation,
- un condensateur connecté au premier convertisseur de tension,
- des moyens de connexion du dispositif électrique configurés pour être reliés à une source électrique pour permettre un transfert de charge vers les premiers moyens d'accumulation depuis ladite source électrique,
le second convertisseur de tension étant configuré pour délivrer, à partir de la tension fournie par les seconds moyens d'accumulation, une tension intermédiaire à partir de laquelle le premier convertisseur de tension est configuré pour précharger le condensateur à une tension prédéterminée.

Selon une variante de ce dispositif, un interrupteur est situé entre d'une part les premiers moyens d'accumulation et d'autre part les premier et second convertisseurs, ledit interrupteur étant configuré pour s'ouvrir avant la précharge du condensateur.

Le dispositif peut comprendre l'une quelconque des caractéristiques décrites précédemment qui lui sont compatibles.

D'autres caractéristiques et avantages de l'invention apparaîtront dans la description qui va maintenant en être faite, en référence aux dessins annexés qui en représentent, à titre indicatif mais non limitatif, un mode de réalisation possible.

Sur ces dessins:
- la figure 1 représente un schéma fonctionnel d'un dispositif électrique selon un mode de réalisation de la présente invention;
- la figure 2 représente un schéma des éléments d'un dispositif électrique selon un mode de réalisation de la présente invention;
- la figure 3 représente un schéma fonctionnel d'un dispositif électrique selon un mode de réalisation de la présente invention;
- la figure 4 représente un organigramme des étapes d'un procédé de transfert de charge selon un mode de réalisation de la présente invention;
- la figure 5 représente un véhicule automobile comprenant un dispositif électrique selon un mode de réalisation de la présente invention
- la figure 6 représente un schéma des éléments d'un dispositif électrique selon un mode de réalisation de la présente invention
- la figure 7 représente un schéma des éléments d'un dispositif électrique selon un mode de réalisation de la présente invention.

Sur ces figures, les mêmes numéros de référence désignent des éléments identiques.

Dans la description qui va suivre, on désigne de façon générale:
Le terme « transistor bipolaire à grille isolée « insulated gate bipolar transistor (IGBT) » en anglais » correspond à un transistor hybride, regroupant un transistor à effet de champ à grille métal-oxyde (« metal-oxyd semiconductor field effect transistor (MOSFET) » en anglais) en entrée et un transistor bipolaire en sortie;
Le terme « réversible » associé à un convertisseur (par exemple un redresseur ou un convertisseur de tension) définit la propriété d'un convertisseur de fonctionner dans les deux sens en terme de puissance (les entrées et sorties du convertisseur peuvent aussi être respectivement des sorties et entrées);
Le terme « point milieu » concernant une bobine, un bobinage ou une phase concerne un point intermédiaire quelconque entre les deux extrémités du bobinage. Néanmoins, ce point milieu se trouve préférentiellement au milieu du bobinage de manière à équilibrer les courants entre les deux demi-bobines et réduire ainsi les vibrations lors des cycles de charge.

Le terme « batterie » correspond à une batterie simple ou à un ensemble de batterie connectées entre elles de sorte que leur chargement puisse se faire de manière simultanée.

Les modes de réalisation de la présente invention concernent un procédé de transfert de charge vers des moyens d'accumulation d'un dispositif électrique à partir d'une source électrique. La source électrique est par exemple extérieure au dispositif.

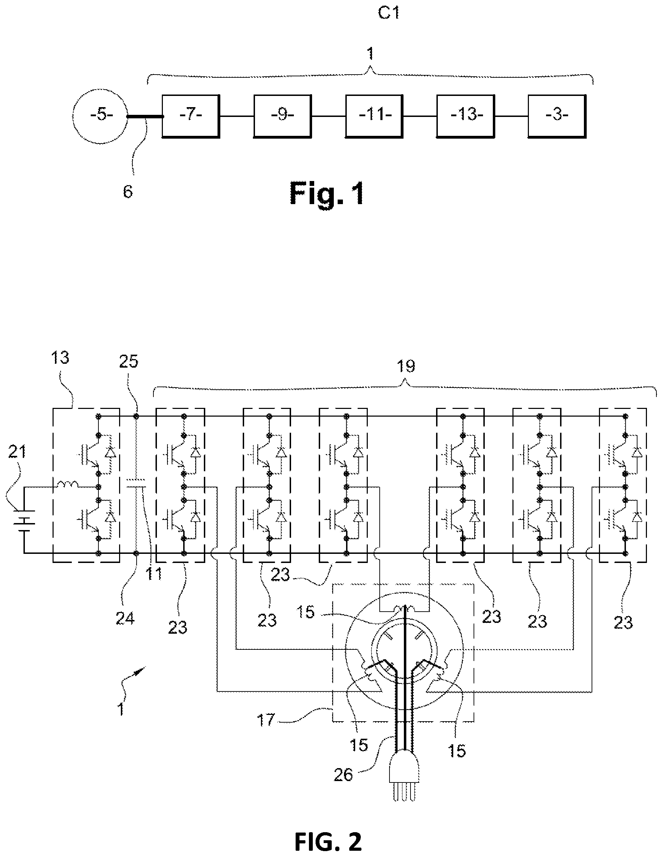

La figure 1 représente un schéma fonctionnel des différents éléments du dispositif électrique 1 permettant de relier les moyens d'accumulation 3 à la source électrique 5. La liaison entre le dispositif électrique 1 et la source électrique extérieure est réalisée par des moyens de connexion 6 comme par exemple un câble électrique, appelé ici câble de charge, muni d'une prise qui vient se connecter à une prise complémentaire de la source électrique 5. La source électrique 5 est par exemple une source de tension alternative triphasée. Cependant, les modes de réalisation de la présente invention ne se limitent pas à ce type de source électrique mais s'étendent également à d'autres types de source électrique comme par exemple une source de tension monophasée. Par ailleurs, cette source électrique 5 peut être entre autres un réseau domestique, une borne dédiée au chargement des moyens d'accumulation électrique, un générateur ou d'autres moyens d'accumulation.

Le dispositif électrique 1 comprend des inductances 7 qui sont reliées à la source électrique 5 via le câble de charge 26. Les inductances 7 sont reliées à un redresseur 9 qui permet de convertir le courant alternatif issu de la source électrique en courant continu pour alimenter les moyens d'accumulation 3. Le redresseur 9 est relié à un convertisseur de tension continue-continue 13 via un condensateur 11. Le condensateur 11 permet une adaptation entre le redresseur 9 et le convertisseur de tension 13 pour délivrer une tension aux moyens d'accumulation. Ainsi, la valeur du condensateur 11 dépendra des caractéristiques des moyens d'accumulation 3 et notamment de la valeur de la tension nominale des moyens d'accumulation 3. Le convertisseur de tension 13 est relié aux moyens d'accumulation 3 et permet d'adapter la valeur de la tension fournie par la source électrique 5 à la valeur de tension nominale des moyens d'accumulation 3. Afin d'éviter l'apparition de sur-courants lors du branchement du câble de charge 26 à la source électrique 5, le dispositif électrique 1 est configuré pour appliquer une précharge au condensateur 11 à partir de l'énergie disponible au niveau des moyens d'accumulation 3 par l'intermédiaire du convertisseur de tension 13. A cet effet, le convertisseur de tension 13 est de préférence réversible pour permettre un transfert d'énergie dans les deux sens. Afin de réaliser cette précharge, on utilise par exemple des interrupteurs au niveau du câble de charge 26. Ces interrupteurs sont ouverts lors du branchement du câble de charge à la source électrique 5 et restent ouverts pendant la précharge du condensateur 11. Lorsque la précharge est terminée, les interrupteurs sont alors fermés pour permettre la charge des moyens d'accumulation 3. Cependant, les interrupteurs utilisés pour isoler le circuit lors de la précharge peuvent également être positionnés ailleurs qu'au niveau du câble de charge. On peut par exemple ouvrir les interrupteurs du redresseur 9 lors de la précharge.

Selon un mode de réalisation de la présente invention représenté sur la figure 2, les inductances 7 comprennent les bobinages des phases 15 d'un moteur électrique triphasé 17. Le redresseur 9 peut être réalisé par un convertisseur à pont en H 19. Les moyens d'accumulation 3 peuvent être réalisés par une batterie rechargeable 21. Le convertisseur 19 comprend par exemple trois ponts en H. Un pont comprend une première et une seconde branches parallèles 23 connectées d'une part la masse 24 et d'autre part à un point de contact 25 du dispositif électrique 1. Lesdites branches parallèles 23 peuvent comprendre chacune deux interrupteurs montés en série. Les interrupteurs sont par exemple réalisés par un transistor avec une diode montée en antiparallèle. Les transistors sont par exemple de type IGBT. Le pont comprend également une branche transversale comprenant une phase 15 du moteur reliant les points milieux desdites première et seconde branches parallèles 23 situés entre les interrupteurs.

Par ailleurs, dans le cas de phases 15 à point milieu, les différentes bornes (correspondant par exemple aux trois phases dans le cas d'une source électrique triphasée) de la source électrique 5 peuvent être reliés respectivement aux points milieux des phases 15.

Le condensateur 11 est connecté à la masse 24 et au point de contact 25. Le convertisseur de tension 13 est un convertisseur de tension continue-continue et comprend une branche principale qui est connectée d'une part au point de contact 25 au niveau d'une première borne d'entrée et d'autre part à la masse 24 au niveau d'une seconde borne d'entrée. La branche principale comprend deux interrupteurs montés en série. Les interrupteurs sont par exemple réalisés par un transistor avec une diode montée en antiparallèle. Les transistors sont par exemple de type IGBT. Le convertisseur de tension 13 comprend également une branche secondaire. La branche secondaire comprend une inductance connectée d'une part au point milieu de la branche principale situé entre les deux interrupteurs et d'autre part à une première borne de sortie du convertisseur de tension 13. La première borne de sortie est reliée à une première borne de la batterie 21 correspondant à la borne positive. La borne de sortie du convertisseur de tension 13 correspond à la masse 24 et est reliée à la seconde borne de la batterie 21, c'est à dire la borne négative.

Un tel dispositif électrique 1 comprend des éléments réversibles, notamment le convertisseur à pont en H 19 et le convertisseur de tension continue 13, de sorte que ce dispositif électrique peut être utilisé aussi bien pour la charge de la batterie 21 lorsque les phases 15 du moteur électrique 17 sont reliées à une source électrique 5, que pour alimenter le moteur électrique 17 à partir de la batterie 21, ce qui permet de limiter le nombre d'éléments nécessaires au dispositif électrique 1 dans le cas d'un moteur électrique destiné à entrainer un véhicule automobile.

Un dispositif similaire à celui de la figure 2 peut être utilisé avec une source électrique 5 monophasée. Dans ce cas, seules deux phases 15 du moteur sont par exemple reliées au deux bornes de la source électrique 5 monophasée.

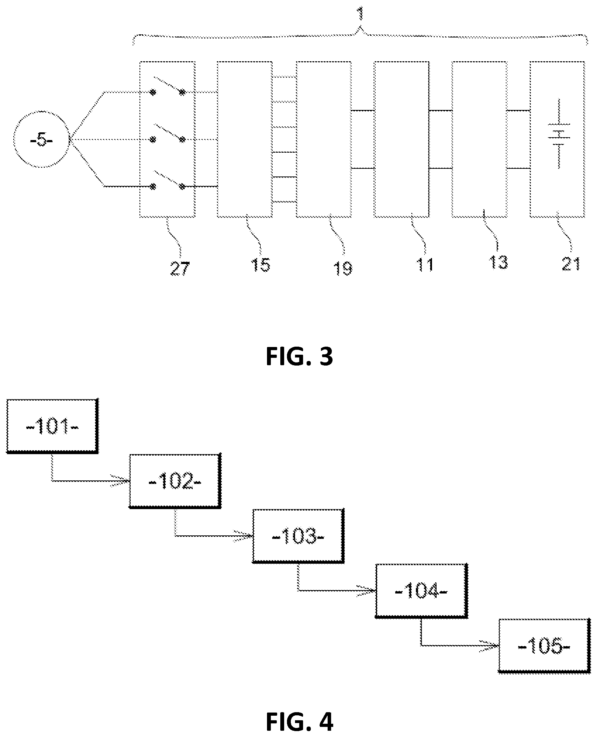

La figure 3 représente un schéma fonctionnel du dispositif électrique de la figure 2 auquel on a ajouté des interrupteurs 27 entre la source électrique 5 et les inductances 15 liées au redresseur 19 pour pouvoir contrôler l'alimentation du dispositif électrique 1 lorsque le câble de charge 26 est branché à la source électrique 5.

Les différentes étapes du procédé permettant la charge des moyens d'accumulation 3 sont représentées sur la figure 4 et vont être décrites à partir du schéma fonctionnel de la figure 3. Selon un mode de réalisation de la présente invention, les moyens d'accumulation 3 comprennent une batterie rechargeable 21.

Il est à noter que la mise en oeuvre des modes de réalisation de la présente invention nécessite un niveau de charge minimum de la batterie 21 pour permettre la précharge du condensateur 11. Cependant dans le cadre des véhicules électriques, il est généralement prévu que les batteries ne soient pas totalement déchargées. En effet, une décharge totale de la batterie peut être néfaste à la batterie et réduire sa durée de vie et le nombre de recharges possibles. Ainsi, les constructeurs automobiles tendent à mettre en oeuvre des dispositifs évitant de décharger totalement la batterie.

La première étape 101 du procédé concerne le branchement du dispositif électrique 1 à la source électrique 5, par exemple via un câble de charge 26. Les interrupteurs 27 étant initialement ouverts lors de ce branchement.

La deuxième étape 102 concerne la précharge du condensateur 11 à une valeur prédéterminée. Typiquement, cette valeur prédéterminée correspond à une tension supérieure ou égale à la tension obtenue aux bornes du condensateur 11 lors de la charge de la batterie 21 par la source électrique 5. En préchargeant le condensateur 11 avant le branchement à la source électrique 5, on permet d'éviter l'apparition des sur-courants. Ainsi, cette valeur dépend des caractéristiques (tension délivrée, monophasée ou triphasée..) de la source électrique 5 à laquelle on branche le dispositif électrique 1. La valeur prédéterminée est donc de préférence adaptée en fonction de la source électrique 5 utilisée. A cet effet, on peut utiliser un dispositif de détection des caractéristiques de la source électrique 5 faisant appel par exemple à un protocole de communication entre le dispositif électrique 1 et la source électrique 5 qui permettrait à la source électrique 5 d'informer le dispositif électrique 1 de ses caractéristiques. Cependant, afin de simplifier le dispositif électrique 1, dans le cas où différentes sources électriques sont utilisées, on peut choisir par défaut le cas le plus défavorable, c'est à dire la source électrique pour laquelle la tension aux bornes du condensateur pendant la charge des moyens d'accumulation est la plus grande. Par exemple, avec une source électrique triphasé de 230V, la tension maximale obtenue au niveau du condensateur est 230*√2*√3=564V. Il faut donc précharger le condensateur 11 à une tension supérieure ou égale à 564V pour éviter les sur-courants. Par exemple, on peut considérer une tension de 600 V et on appliquera cette tension dans tous les cas. Le condensateur 11 est alors préchargé à partir de la batterie à une tension de 600V, cette tension étant obtenue grâce au convertisseur de tension 13 qui est configuré pour fournir la valeur prédéterminée, ici 600V, au condensateur 11. La précharge du condensateur 11 peut être réalisée automatiquement par le véhicule, par exemple par des moyens de traitement tels qu'un microprocesseur, reliés à des moyens de détection configurés pour détecter le branchement du dispositif 1 à la source électrique 5.

La troisième étape 103 correspond à la fermeture des interrupteurs 27 ce qui provoque la connexion électrique entre les phases 15 du moteur électrique 17 et la source électrique 5. Cette étape peut être réalisée automatiquement par le véhicule, par exemple par les moyens de traitement reliés à des moyens de détection configurés pour détecter le niveau de charge du condensateur 11. Ainsi, les moyens de traitement pilotent la fermeture des interrupteurs 27 lorsque la précharge du condensateur 11 est terminée.

La quatrième étape 104 correspond à la charge de la batterie 21. En effet, avec la fermeture des interrupteurs 27 à l'étape 103, la tension alternative fournie par la source électrique 5 est transmise aux inductances 15 du redresseur 19. Le redresseur 19 est alors configuré pour convertir la tension alternative fournie par la source électrique 5 en tension continue. La tension continue fournie à la sortie du redresseur 19 est alors abaissée à la tension nominale de la batterie 21 par le convertisseur de tension continue 13 pour permettre le transfert de charge entre la source électrique 5 et la batterie 21. Le redresseur 19 et le convertisseur de tension 13 sont par exemple pilotés par les moyens de traitement.

La cinquième étape 105 concerne le débranchement du dispositif 1 de la source électrique 5, notamment le débranchement du câble de charge 26, lorsque la charge de la batterie 21 est terminée. Il est à noter qu'il n'est pas nécessaire que la batterie 21 soit totalement rechargée pour mettre fin à la recharge. Le débranchement peut être détecté de sorte que les moyens de traitement autorisent l'alimentation du moteur électrique 17 par la batterie 21 via le pilotage du convertisseur de tension 13 et du redresseur 19 selon les commandes de l'utilisateur.

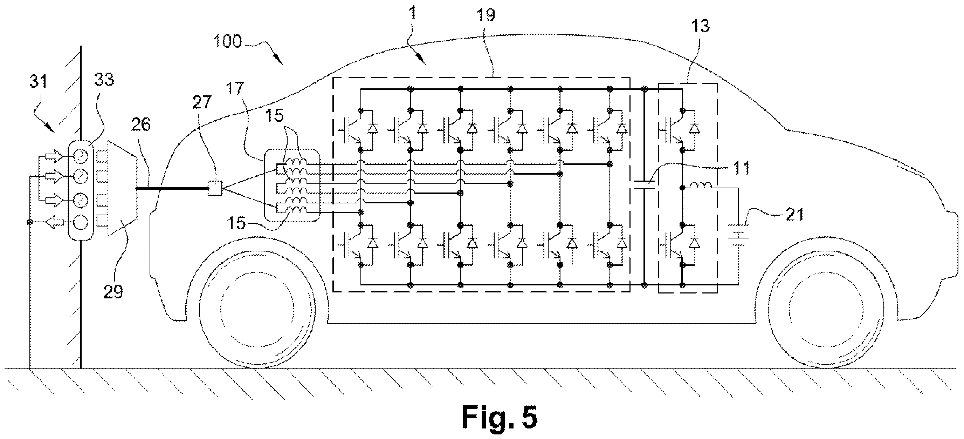

Afin de mieux comprendre les différents aspects de la présente invention, un exemple d'utilisation d'un véhicule automobile 100 représenté sur la figure 5 va maintenant être décrit en détails. Le véhicule 100 comprend le dispositif électrique 1 selon un mode de réalisation de la présente invention et Le véhicule 100 comprend un moteur électrique 17 dont les phases 15 sont à points milieux. Le moteur électrique 17 est relié à un dispositif électrique 1 tel que décrit précédemment comprenant un convertisseur de tension 13 branché sur la batterie 21, un condensateur 11 branché sur le convertisseur de tension 13, et un convertisseur 19 à pont en H branché sur le condensateur 11. En traction, le convertisseur 19 permet d'alimenter le moteur électrique 17 à partir de la batterie 21. Le véhicule 100 comprend également un câble de charge 26 qui permet de relier les points milieux des phases 15 du moteur électrique 17 aux bornes d'une prise 29 située à l'autre extrémité du câble de charge 26. Le câble de charge 26 comprend un boîtier d'interrupteurs 27 qui sont par défaut en position ouverte initialement lors d'une opération de charge de la batterie 21. La batterie 21 est configurée pour fonctionner entre un niveau de charge minimal Vₘᵢₙ et un niveau de charge maximal Vmax. Le niveau de charge minimal Vₘᵢₙ correspond à un niveau de charge Vₘᵢₙ₁ en dessous duquel la batterie s'use de façon prématurée auquel on ajoute un niveau de charge Vₘᵢₙ₂ correspondant à l'énergie nécessaire pour charger le condensateur 11. Si le niveau de charge de la batterie atteint ce seuil minimal, la batterie cesse d'alimenter le moteur électrique 17 du véhicule 100. Ainsi, lorsque le niveau de charge se rapproche de ce niveau minimal, l'utilisateur du véhicule 100 doit trouver une source électrique capable de recharger la batterie. Cette source électrique est par exemple une borne de chargement dédiée 31 qui comprend une prise complémentaire 33 de la prise 29 du câble de charge 26. La borne de chargement dédiée 31 délivre par exemple une tension alternative triphasée de 230V. Pour recharger sa batterie 21, l'utilisateur gare son véhicule 100 près de la borne de chargement dédiée 31 et branche le câble de charge 26 à la borne de chargement 31. Le branchement du câble de charge 26 à la borne de chargement 31 est détecté par un moyen de traitement, tel que le système de gestion électronique du véhicule 100. Le moyen de traitement pilote alors le convertisseur de tension 13 pour charger le condensateur à une tension de 600V. Lorsque le condensateur est chargé, le moyen de traitement pilote alors la fermeture des interrupteurs 27 ce qui permet d'alimenter les phases 15 par la borne de chargement 31. Le convertisseur à ponts en H 19 et le convertisseur de tension 13 sont alors configurés pour transférer la charge reçue de la borne de chargement 31 vers la batterie 21. Lorsque la batterie 21 est complètement chargée, le moyen de traitement indique à l'utilisateur que la batterie 21 est rechargée et ouvre les interrupteurs 27. L'utilisateur débranche alors le câble de chargement 26 et peut à nouveau utiliser son véhicule 100, le moteur étant alors alimenté par la batterie 21 chargée.

Ainsi, la précharge du condensateur permet d'obtenir une absorption sinusoïdale sur le courant délivré par la source électrique 5 avant le début du transfert de charge entre la source électrique et les moyens d'accumulation, ce qui permet d'éviter les sur-courants. L'absence de sur-courants permet de maximiser la durée de vie du condensateur et d'éviter le déclenchement d'un disjoncteur lié à la source électrique 5. Par ailleurs, le fait d'utiliser les moyens d'accumulation et le convertisseur de tension pour précharger le condensateur permet en outre de limiter le nombre de composants nécessaires pour la recharge des moyens d'accumulation.

Bien évidemment, l'invention ne se limite pas aux exemples décrits. Notamment le procédé a été décrit pour un dispositif dans lequel les inductances sont aussi les phases du moteur. Cependant, les inductances pourraient n'être dédiées qu'au redresseur.

En outre, les moyens de connexion pourraient être reliés aux bobinages des phases du moteur par des points différents des points milieux des bobinages. Par exemple, les moyens de connexion peuvent être reliés à une phase par l'intermédiaire d'une de ses bornes comme divulgué par exemple dans la demande FR 2938711 de la demanderesse.

Le procédé ne se limite pas à un procédé de transfert de charge à partir d'une source électrique alternative. Le procédé de transfert de charge comprenant une précharge du condensateur pourrait être mis en oeuvre à partir d'une source électrique continue comme divulgué par exemple dans la demande FR2973963 de la demanderesse.

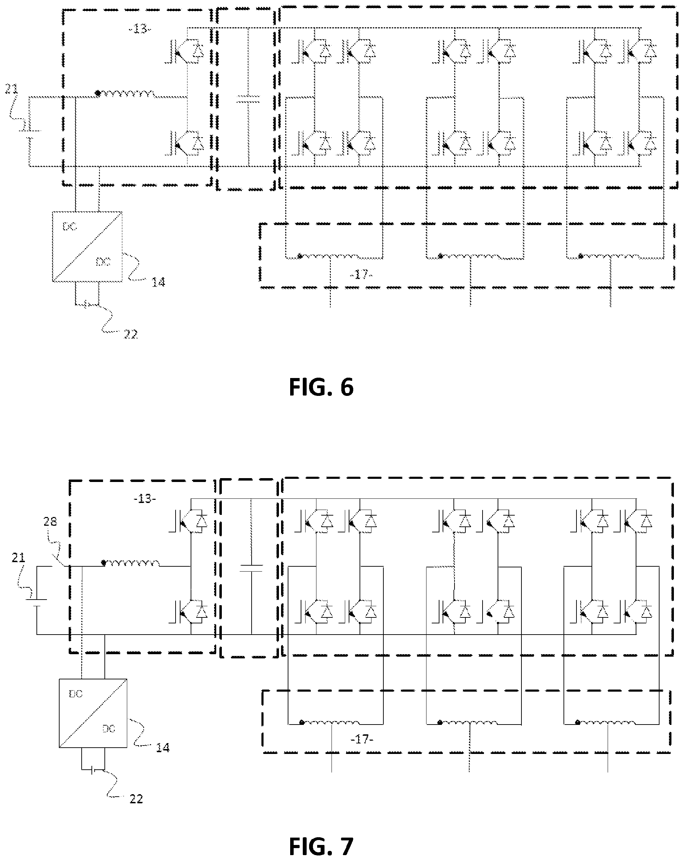

La figure 6 illustre un autre mode de réalisation du dispositif selon l'invention. L'exemple représenté en figure 6 diffère notamment de celui représenté en figure 2, en ce qu'il contient un second convertisseur de tension continu-continu 14 et de seconds moyens d'accumulation 22. Le second convertisseur de tension 14 est connecté entre les premiers moyens d'accumulation 21 et le premier convertisseur de tension 13. En particulier, une première borne du second convertisseur 14 est reliée aux premières bornes des premiers moyens d'accumulation 21 et du premier convertisseur 13 et une seconde borne du convertisseur 14 est reliée aux secondes bornes des premiers moyens d'accumulation 21 et du premier convertisseur 13.

Les seconds moyens d'accumulation sont en particulier réalisés par une batterie rechargeable 22, dite seconde batterie rechargeable. Dans l'exemple illustré en figure 6, la seconde batterie 22 est notamment destinée à une application différente de celle de la première batterie 21. La première batterie 21 est une batterie haute tension destinée à délivrer une tension comprise par exemple entre 180 et 500 V, notamment égale à 400 V ; tandis que la seconde batterie 22 est une batterie basse tension destinée à délivrer une tension par exemple comprise entre 9 et 16 V, notamment égale à 12 V. Dans la vie du véhicule, la première batterie rechargeable 21 est destinée entre autres à alimenter les phases du 15 du moteur 17 lors de la traction du véhicule par le moteur. La seconde batterie rechargeable 22 est destinée à alimenter d'autres consommateurs électriques du véhicule différents du moteur électrique 17, tels que par exemple des essuie-glaces ou une unité d'éclairage d'habitacle du véhicule.

Le second convertisseur de tension 14 est configuré pour délivrer, à partir de l'énergie disponible dans la seconde batterie rechargeable 22, une tension intermédiaire qui est notamment égale à la tension aux bornes de la première batterie 21. L'énergie issue de la seconde batterie 22 et convertie par le second convertisseur 14 est ensuite utilisée par le premier convertisseur 13 pour obtenir la précharge du condensateur 11. Le second convertisseur de tension 14 et la seconde batterie 22 contribuent donc à la précharge du condensateur 11 avec la première batterie 21. Ainsi, le second convertisseur 14 et la seconde batterie 22 sont en complément de la première batterie 21 et permettent de diminuer le temps de précharge et/ou de compléter la tension délivrée au condensateur 11 pendant la précharge.

Dans un procédé selon l'invention utilisant un dispositif selon ce mode de réalisation, dans l'étape 102 de précharge, le condensateur 11 est en outre préchargé à partir de la seconde batterie 22. Le second convertisseur de tension 22 augmente la tension délivrée par la seconde batterie 22 à la tension intermédiaire. Ensuite, le premier convertisseur 13 augmente cette tension intermédiaire pour fournir la valeur prédéterminée de précharge du condensateur 11.

Le second convertisseur 14 peut comprendre un circuit similaire à celui du premier convertisseur 13, en particulier avec des paramètres de composants adaptés à son application aux basses tensions. Le second convertisseur 14 est par exemple un convertisseur réversible qui peut convertir une tension de la seconde batterie 22 en une tension plus élevée pour la délivrer à la seconde batterie 21 et/ou au premier convertisseur 13 ; et qui peut, inversement, convertir une tension élevée, issue par exemple de la première batterie 21 et/ou du premier convertisseur 13, en une tension plus faible pour alimenter la seconde batterie 22.

La figure 7 illustre un autre dispositif selon l'invention. Ce dispositif sera décrit en mettant en avant ses différences par rapport à celui représenté en figure 6. Le dispositif comprend un interrupteur 28 entre d'une part la première batterie 21 et d'autre part les premier 13 et second 14 convertisseurs. Cet interrupteur 28 est par exemple un transistor ou un relais électromécanique. Grâce à cet interrupteur 28, la première batterie 21 peut être déconnectée des autres parties du dispositif et la précharge du condensateur 11 être réalisée à partir de la seule seconde batterie 22. Ainsi, le condensateur 11 peut être préchargé même dans des situations où la première batterie 13 a une charge trop faible, par exemple proche d'un niveau de charge en dessous duquel la batterie 13 se dégraderait si son niveau de charge continuait à diminuer.

Dans un procédé selon l'invention utilisant le dispositif représenté en figure 7, l'interrupteur 28 est ouvert avant l'étape de précharge 102, et notamment après l'étape 101 de branchement du dispositif électrique à la source électrique 5. Dans l'étape 102 de précharge, le condensateur 11 est préchargé à partir de la seule seconde batterie 22. La première batterie 27 étant déconnectée des autres parties du dispositif 1, elle ne participe pas à la précharge du condensateur 11. Ensuite, à l'étape 103, l'interrupteur 28 peut être fermé pour permettre la charge des premiers moyens d'accumulation 21 à partir de la source électrique 5.

## Revendications

1. Procédé de transfert de charge vers des moyens d'accumulation (3, 21) d'un dispositif électrique (1) d'un véhicule automobile (100) à partir d'une source électrique (5), ledit dispositif électrique (1) comprenant:
- un premier convertisseur de tension (13) connecté aux premiers moyens d'accumulation (3, 21),
- un condensateur (11) connecté au premier convertisseur de tension (13),
- des moyens de connexion (6, 26) du dispositif électrique (1) destinés à être reliés à la source électrique (5),
- un second convertisseur de tension (14) connecté d'une part entre les premiers moyens d'accumulation (21) et le premier convertisseur (13) et d'autre part à de seconds moyens d'accumulation (22),
le procédé comprenant une étape de branchement (101) des moyens de connexion (6, 26) à la source électrique (5) pour permettre un transfert de charge vers les premiers moyens d'accumulation (3, 21),
**caractérisé en ce que** le procédé comprend également une étape de précharge (102) du condensateur (11) à une tension prédéterminée à partir de la tension fournie par les premiers moyens d'accumulation (3, 21) par l'intermédiaire du premier convertisseur de tension (13), ladite étape de précharge (102) étant antérieure au transfert de charge (104) de la source électrique (5) vers les premiers moyens d'accumulation (3, 21) et **en ce que**, à ladite étape de précharge, le second convertisseur de tension (14) délivre, à partir de la tension fournie par les seconds moyens d'accumulation (22), une tension intermédiaire à partir de laquelle le premier convertisseur de tension (13) précharge le condensateur (11) à ladite tension prédéterminée.

2. Procédé de transfert selon la revendication 1, dans lequel la valeur de tension prédéterminée correspond à une tension supérieure ou égale à la tension obtenue aux bornes du condensateur (11) lors de la charge (104) des premiers moyens d'accumulation (3, 21) par la source électrique (5).

3. Procédé de transfert selon la revendication 1 ou 2, dans lequel le dispositif électrique (1) comprend également un redresseur (9, 19) et des inductances (7, 15), ledit redresseur (9, 19) étant connecté d'une part au condensateur (11) et d'autre part aux inductances (7, 15), lesdites inductances (7, 15) étant reliées aux moyens de connexion (6, 26).

4. Procédé de transfert selon la revendication 3, dans lequel lors de l'étape de précharge (102), les interrupteurs du redresseur (9, 19) sont ouverts.

5. Procédé de transfert selon la revendication 3 ou 4, dans lequel le redresseur est un convertisseur à ponts en H (19) et dans lequel les inductances (7, 15) comprennent les phases (15) d'un moteur électrique (17).

6. Dispositif électrique (1) d'un véhicule automobile (100) comprenant:
- des premiers moyens d'accumulation (3, 21),
- un premier convertisseur de tension (13) connecté aux premiers moyens d'accumulation (3, 21),
- un condensateur (11) connecté au premier convertisseur de tension (13),
- des moyens de connexion (6, 26) du dispositif électrique (1) configurés pour être reliés à une source électrique (5) pour permettre un transfert de charge vers les premiers moyens d'accumulation (3, 21) depuis ladite source électrique (5),
- un second convertisseur de tension (14) connecté d'une part entre les premiers moyens d'accumulation (21) et le premier convertisseur (13) et d'autre part à de seconds moyens d'accumulation (22),
**caractérisé en ce que** le premier convertisseur de tension (13) est configuré pour précharger le condensateur (11) à une tension prédéterminée à partir de la tension fournie par les premiers moyens d'accumulation, avant le transfert de charge de ladite source électrique (5) vers les premiers moyens d'accumulation (3, 21) et **en ce que** le second convertisseur de tension (14) est configuré pour délivrer, à partir de la tension fournie par les seconds moyens d'accumulation (22), une tension intermédiaire à partir de laquelle le premier convertisseur de tension (13) précharge le condensateur (11) à ladite tension prédéterminée.

7. Dispositif électrique (1) selon la revendication 6, dans lequel la tension prédéterminée correspond à une tension supérieure ou égale à la tension établie aux bornes du condensateur (11) lors de la charge des premiers moyens d'accumulation (3, 21) par la source électrique (5).

8. Dispositif électrique (1) selon la revendication 6 ou 7 comprenant également un redresseur (9, 19) et des inductances (7, 15), ledit redresseur étant connecté d'une part au condensateur (11) et d'autre part aux inductances (7, 15), lesdites inductances (7, 15) étant reliées aux moyens de connexion (6, 26).

9. Dispositif électrique (1) selon la revendication 8, dans lequel le redresseur est un convertisseur à ponts en H (19) et dans lequel les inductances (7, 15) comprennent les phases (15) d'un moteur électrique (17).

10. Dispositif électrique (1) selon la revendication 9, dans lequel les ponts du convertisseur (19) comprennent une première et une seconde branches parallèles (23) et une branche transversale, lesdites branches parallèles (23) comprenant deux interrupteurs montés en série, et ladite branche transversale comprenant une desdites inductances (7, 15) et reliant les points milieux desdites première et deuxième branches parallèles (23).

11. Dispositif électrique (1) selon la revendication 9 ou 10, dans lequel les phases (15) du moteur (17) comprennent un bobinage à point milieu, et dans lequel les moyens de connexion (6, 26) sont reliés au niveau des points milieux des bobinages des phases (15) du moteur électrique (17).

12. Dispositif électrique (1) selon l'une des revendications 6 à 11, dans lequel le premier convertisseur de tension (13) est un convertisseur de tension continue-continue et comprend deux interrupteurs montés en série entre une première et une seconde bornes d'entrée, le point milieu situé entre les deux interrupteurs étant connecté à une première borne d'une inductance dont la seconde borne est reliée à une première borne de sortie, une seconde borne de sortie étant reliée à la seconde borne d'entrée et à la masse (24).

13. Dispositif électrique (1) selon la revendication 12, dans lequel les premiers moyens d'accumulation (3, 21) comprennent une borne positive connectée à la première borne de sortie du premier convertisseur de tension (13) et une borne négative reliée à la seconde borne de sortie du premier convertisseur de tension (13).

14. Dispositif électrique (1) selon la revendication 12 ou 13, dans lequel le condensateur (11) est branché entre la première et la seconde borne d'entrée du premier convertisseur de tension (13).

15. Dispositif électrique (1) selon l'une des revendications 6 à 14, dans lequel les premiers moyens d'accumulation (3, 21) sont destinés à alimenter un moteur électrique (17) et les seconds moyens d'accumulation (22) sont destinés à alimenter un ou plusieurs consommateurs électriques différents dudit moteur électrique (17).

## Patentansprüche

1. Verfahren zur Ladungsübertragung zu Speichereinrichtungen (3, 21) einer elektrischen Vorrichtung (1) eines Fahrzeugs (100) von einer elektrischen Quelle (5), wobei diese elektrische Vorrichtung (1) Folgendes umfasst:
- einen ersten Spannungswandlers (13), der an erste Speichereinrichtungen (3, 21) angeschlossen ist,
- einen Kondensator (11), der an einen ersten Spannungswandler (13) angeschlossen ist,
- Anschlusseinrichtungen (6, 26) der elektrischen Vorrichtung (1) zur Verbindung mit der elektrischen Quelle (5),
- einen zweiten Spannungswandler (14), der zum einen zwischen den ersten Speichereinrichtungen (21) und dem ersten Wandler (13) und zum anderen an zweite Speichereinrichtungen (22) angeschlossen ist,
wobei das Verfahren einen Anschlussschritt (101) der Anschlusseinrichtungen (6, 26) an die elektrische Quelle (5) umfasst, um eine Ladungsübertragung zu den ersten Speichereinrichtungen (3, 21) zu ermöglichen,
**dadurch gekennzeichnet, dass** das Verfahren ebenfalls einen Vorladeschritt (102) des Kondensators (11) auf eine vorgegebene Spannung ausgehend von der von den ersten Speichereinrichtungen (3, 21) über den ersten Spannungswandler (13) gelieferten Spannung umfasst, wobei der genannte Vorladeschritt (102) vor der Ladungsübertragung (104) von der elektrischen Quelle (5) an die ersten Speichereinrichtungen (3, 21) angeordnet ist, und dadurch, dass bei dem genannten Vorladeschritt der zweite Spannungswandler (14) ausgehend von der von den zweiten Speichereinrichtungen (22) gelieferten Spannung eine Zwischenspannung liefert, mit der der erste Spannungswandler (13) den Kondensator (11) auf die vorgegebenen Spannung vorlädt.

2. Verfahren zur Ladungsübertragung nach Anspruch 1, in dem der vorgegebene Spannungswert einer Spannung größer oder gleich der Spannung ist, die bei der Ladung (104) der ersten Speichereinrichtungen (3, 21) durch die elektrische Quelle (5) an den Anschlussklemmen des Kondensators (11) abgenommen wird.

3. Verfahren zur Ladungsübertragung nach Anspruch 1 oder 2, in dem die elektrische Vorrichtung (1) ebenfalls einen Gleichrichter (9, 19) und Induktanzen (7, 15) umfasst, wobei der genannte Gleichrichter (9, 19) zum einen an den Kondensator (11) und zum anderen an die Induktanzen (7, 15) angeschlossen ist, wobei die Induktanzen (7, 15) mit den Anschlusseinrichtungen (6, 26) verbunden sind.

4. Verfahren zur Ladungsübertragung nach Anspruch 3, in dem beim Vorladeschritt (102) die Schalter des Gleichrichters (9, 19) geöffnet sind.

5. Verfahren zur Ladungsübertragung nach Anspruch 3 oder 4, in dem der Gleichrichter ein H-Brückenwandler (19) ist und in dem die Induktanzen (7, 15) die Phasen (15) eines Elektromotors (17 umfassen.

6. Elektrische Vorrichtung (1) eines Fahrzeugs (100), die Folgendes umfasst:
- erste Speichereinrichtungen (3, 21),
- einen ersten Spannungswandler (13), der an die ersten Speichereinrichtungen (3, 21) angeschlossen ist,
- einen Kondensator (11), der an den ersten Spannungswandler (13) angeschlossen ist,
- Anschlusseinrichtungen (6, 26) der elektrischen Vorrichtung (1), die so konfiguriert sind, dass sie mit einer elektrischen Quelle (5) verbunden werden können, um die Ladungsübertragung von der genannten elektrischen Quelle (5) zu den ersten Speichereinrichtungen (3, 21) zu ermöglichen,
- einen zweiten Spannungswandler (14), der zum einen zwischen den ersten Speichereinrichtungen (21) und den ersten Wandler (13) und zum anderen an die zweiten Speichereinrichtungen (22) angeschlossen ist,
**dadurch gekennzeichnet, dass** der erster Spannungswandler (13) konfiguriert ist, um den Kondensator (11) vor der Ladungsübertragung von der genannten elektrischen Quelle (5) zu den ersten Speichereinrichtungen (3, 21) auf eine vorgegebenen Spannung ausgehend von der Spannung, die von den ersten Speichereinrichtungen geliefert wird, vorzuladen, und dadurch, dass der zweite Spannungswandler (14) konfiguriert ist, um ausgehend von der Spannung, die von den zweiten Speichereinrichtungen (22) geliefert wird, eine Zwischenspannung zu liefern, mit der der erste Spannungswandler (13) den Kondensator (11) auf die vorgegebene Spannung vorlädt.

7. Elektrische Vorrichtung (1) nach Anspruch 6, in der bei der Ladung der ersten Speichereinrichtungen (3, 21) durch die elektrische Quelle (5) die vorgegebene Spannung einer Spannung größer oder gleich der Spannung an den Anschlussklemmen des Kondensators (11) ist.

8. Elektrische Vorrichtung (1) nach Anspruch 6 oder 7, die ebenfalls einen Gleichrichter (9, 19) und Induktanzen (7, 15) umfasst, wobei der genannte Gleichrichter zum einen an einen Kondensator (11) und zum anderen an Induktanzen (7, 15) angeschlossen ist, wobei die genannten Induktanzen (7, 15) mit Anschlusseinrichtungen verbunden sind (6, 26).

9. Elektrische Vorrichtung (1) nach Anspruch 8, in der der Gleichrichter ein H-Brückenwandler (19) ist und in der die Induktanzen (7, 15) die Phasen (15) eines Elektromotors (17) umfassen.

10. Elektrische Vorrichtung (1) nach Anspruch 9, in der die Brücken des Wandlers (19) einen ersten und einen zweiten Parallelzweig (23) und einen Querzweig umfassen, wobei die genannten Parallelzweige (23) zwei in Reihe geschaltete Schalter umfassen und der genannte Querzweig eine der genannten Induktanzen (7, 15) umfasst und die Punkte in der Mitte zwischen dem ersten und dem zweiten Parallelzweig (23) verbindet.

11. Elektrische Vorrichtung (1) nach Anspruch 9 oder 10, in der die Phasen (15) des Motors (17) eine Wicklung mit Mittelabgriff enthalten und in der die Anschlusseinrichtungen (6, 26) mit den Mittelpunkten der Wicklungen der Phasen (15) des Elektromotors (17) verbunden sind.

12. Elektrische Vorrichtung (1) nach einem der Ansprüche 6 bis 11, in der der erste Spannungswandler (13) ein Gleichspannungswandler ist und zwei zwischen einer ersten und einer zweiten Eingangsanschlussklemme in Reihe geschaltete Schalter umfasst, wobei der Mittelpunkt zwischen den beiden Schaltern an eine erste Anschlussklemme einer Induktanz angeschlossen ist, deren zweite Anschlussklemme mit einer einen ersten Ausgangsanschlussklemme verbunden ist, wobei eine zweite Ausgangsanschlussklemme mit der zweiten Eingangsanschlussklemme und der Masse (24) verbunden ist.

13. Elektrische Vorrichtung (1) nach Anspruch 12, in der die ersten Speichereinrichtungen (3, 21) eine positive Anschlussklemme, die an die erste Ausgangsanschlussklemme des ersten Spannungswandlers (13) angeschlossen ist, und eine negative Anschlussklemme umfassen, die mit der zweiten Ausgangsanschlussklemme des ersten Spannungswandlers (13) verbunden ist.

14. Elektrische Vorrichtung (1) nach Anspruch 12 oder 13, in der der Kondensator (11) zwischen der ersten und der zweiten Eingangsanschlussklemme des ersten Spannungswandlers (13) geschaltet ist.

15. Elektrische Vorrichtung (1) nach einem der Ansprüche 6 bis 14, in der die ersten Speichereinrichtungen (3, 21) zur Versorgung eines Elektromotors (17) gedacht sind und die zweiten Speichereinrichtungen (22) einen oder mehrere andere elektrische Verbraucher als den Elektromotor (17) versorgen sollen.

## Claims

1. Method for transferring charge to accumulation means (3, 21) of an electric device (1) of an automotive vehicle (100) from an electric source (5), said electric device (1) comprising:
- a first voltage converter (13) connected to the first accumulation means (3, 21),
- a condenser (11) connected to the first voltage converter (13),
- connection means for connecting (6, 26) the electric device (1) intended to be connected to the electric source (5),
- a second voltage converter (14) connected, on the one hand, between the first accumulation means (21) and the first converter (13) and, on the other hand, to second accumulation means (22),
the method comprising a step for connecting (101) the connection means (6, 26) to the electric source (5) to enable a charge transfer to the first accumulation means (3, 21),
**characterised in that** the method also comprises a step for pre-charging (102) the condenser (11) to a predetermined voltage from the voltage supplied by the first accumulation means (3, 21) by the intermediary of the first voltage converter (13), said pre-charging step (102) being prior to the charge transfer (104) from the electric source (5) to the first accumulation means (3, 21) and **in that**, to said pre-charging step, the second voltage converter (14) delivers, from the voltage supplied by the second accumulation means (22), an intermediary voltage from which the first voltage converter (13) pre-charges the condenser (11) to said predetermined voltage.

2. Transfer method according to claim 1, wherein the predetermined voltage value corresponds to a voltage higher than or equal to the voltage obtained at the terminals of the condenser (11) during the charging (104) of the first accumulation means (3, 21) by the electric source (5).

3. Transfer method according to claim 1 or 2, wherein the electric device (1) also comprises a rectifier (9, 19) and inductances (7, 15), said rectifier (9, 19) being connected, on the one hand, to the condenser (11) and, on the other hand, to the inductances (7, 15), said inductances (7, 15) being connected to the connection means (6, 26).

4. Transfer method according to claim 3, wherein during the pre-charging step (102), the switches of the rectifier (9, 19) are open.

5. Transfer method according to claim 3 or 4, wherein the rectifier is an H bridge converter (19) and wherein the inductances (7, 15) comprise phases (15) of an electric motor (17).

6. Electric device (1) of an automotive vehicle (100) comprising:
- first accumulation means (3, 21),
- a first voltage converter (13) connected to the first accumulation means (3, 21),
- a condenser (11) connected to the first voltage converter (13),
- connection means for connecting (6, 26) the electric device (1) configured to be connected to an electric source (5) to enable a charge transfer to the first accumulation means (3, 21) from said electric source (5),
- a second voltage converter (14) connected, on the one hand, between the first accumulation means (21) and the first converter (13) and, on the other hand, to second accumulation means (22),
**characterised in that** the first voltage converter (13) is configured to pre-charge the condenser (11) to a predetermined voltage from the voltage supplied by the first accumulation means, before the charge transfer from said electric source (5) to the first accumulation means (3, 21) and **in that** the second voltage converter (14) is configured to deliver, from the voltage supplied by the second accumulation means (22), an intermediary voltage from which the first voltage converter (13) pre-charges the condenser (11) to said predetermined voltage.

7. Electric device (1) according to claim 6, wherein the predetermined voltage corresponds to a voltage higher than or equal to the voltage established at the terminals of the condenser (11) during the charging of the first accumulation means (3, 21) by the electric source (5).

8. Electric device (1) according to claim 6 or 7 also comprising a rectifier (9, 19) and inductances (7, 15), said rectifier being connected, on the one hand, to the condenser (11) and, on the other hand, to the inductances (7, 15), said inductances (7, 15) being connected to the connection means (6, 26).

9. Electric device (1) according to claim 8, wherein the rectifier is an H bridge converter (19) and wherein the inductances (7, 15) comprises phases (15) of an electric motor (17).

10. Electric device (1) according to claim 9, wherein the bridges of the converter (19) comprise a first and a second parallel branch (23) and a transversal branch, said parallel branches (23) comprising two switches assembled in series, and said transversal branch comprising one of said inductances (7, 15) and connecting the midpoints of said first and second parallel branches (23).

11. Electric device (1) according to claim 9 or 10, wherein the phases (15) of the motor (17) comprise a midpoint winding, and wherein the connection means (6, 26) are connected to the midpoints of the windings of the phases (15) of the electric motor (17).

12. Electric device (1) according to one of the claims 6 to 11, wherein the first voltage converter (13) is a DC/DC voltage converter and comprises two switches assembled in series between a first and a second input terminal, the midpoint located between the two switches being connected to a first terminal of an inductance and the second terminal is connected to a first output terminal, a second output terminal being connected to the second input terminal and to the earth (24).

13. Electric device (1) according to claim 12, wherein the first accumulation means (3, 21) comprise a positive terminal connected to the first output terminal of the first voltage converter (13) and a negative terminal connected to the second output terminal of the first voltage converter (13).

14. Electric device (1) according to claim 12 or 13, wherein the condenser (11) is connected between the first and second input terminal of the first voltage converter (13).

15. Electric device (1) according to the claims 6 to 14, wherein the first accumulation means (3, 21) are intended to supply an electric motor (17) and the second accumulation means (22) are intended to supply one or several electric consumers, different from said electric motor (17).
